# DEMANDE DE BREVET EUROPEEN

(11) **EP 2 543 481 A1**
(43) Date de publication de la demande: **09.01.2013**
(21) Numéro de dépôt: 11305895.2
(22) Date de dépôt: 08.07.2011
(51) Int. Cl.: B25H 3/02, B62B 5/06, B65D 25/28, A45C 13/26, A45C 13/22

(54) **Système de poignée pour servante d'atelier**

(71) Demandeur: SOGENEX S.R.L., 36034 Malo (IT)
(72) Inventeur: Rossi, Andrea Antonio, 36034 Malo (VI) (IT)
(74) Mandataire: Regimbeau

(57) **Abrégé**

La présente invention concerne une servante (1) d'atelier sur roulettes (21) comprenant un couvercle (4) muni d'une poignée (5) pivotante, adaptée pour pivoter entre une position repliée dans laquelle elle est escamotée sur le couvercle (4), et une position déployée dans laquelle elle est en saillie par rapport audit couvercle (4) et peut être saisie par un utilisateur souhaitant déplacer ladite servante (1) sur ses roulettes (21),
le couvercle (4) comprenant des moyens de verrouillage élastiques (67) qui sont adaptés pour bloquer la poignée (5) en position déployée lorsqu'un utilisateur la relève, ces moyens de verrouillage étant déblocables manuellement,
caractérisée en ce que le couvercle comprend en outre des moyens de verrouillage (7) élastiques déblocables manuellement permettant le maintien de la poignée (5) en position escamotée sur le couvercle (4).

## Description

La présente invention concerne le domaine technique des servantes d'atelier, et plus particulièrement des poignées pour la manipulation et le déplacement de servantes d'atelier à roulettes.

### ETAT DE L'ART

Les servantes d'atelier sont communément utilisées pour le rangement et le transport d'équipements et d'outils de travail. Ces servantes peuvent prendre plusieurs formes, telles que des malles ou des ensembles formés de plusieurs conteneurs superposés.
Ces servantes sont destinées à stocker des équipements encombrants et peuvent donc avoir un poids élevé. Elles sont donc fréquemment munies de roulettes afin de faciliter leur transport, et d'une poignée amovible permettant à l'utilisateur de la guider en déplacement.

Le document EP2133180 présente une telle servante comprenant un caisson présentant un compartiment inférieur et un compartiment supérieur, ledit caisson étant muni de deux roulettes permettant de le basculer afin de l'entrainer en déplacement.
Le compartiment supérieur est fermé au moyen d'un couvercle muni d'une poignée amovible permettant de tirer la servante, et d'une poignée fixe permettant de soulever le couvercle. La poignée amovible peut être manipulée par l'utilisateur pour alterner entre une position repliée dans laquelle elle est escamotée sur le couvercle, et une position déployée dans laquelle elle fait saillie par rapport au couvercle et peut être facilement saisie par l'utilisateur. La poignée amovible est munie de moyens de verrouillage assurant son maintien lorsqu'elle est en position déployée, et que l'utilisateur peut déverrouiller afin de replacer la poignée amovible en position repliée.
Dans la servante présentée dans le document EP2133180, les moyens de verrouillage sont constitués de deux moyens coulissants que l'utilisateur peut déplacer afin de verrouiller ou déverrouiller la poignée amovible en position déployée.

Ce système de poignée et de moyens de verrouillage présente toutefois plusieurs inconvénients.
Il requiert en effet plusieurs poignées selon le type de prise que souhaite l'utilisateur ; une première poignée pour soulever la servante, et une seconde poignée pour la déplacer en la tirant.
De plus, les moyens de verrouillage tels que présentés ne sont pas facilement manipulables par l'utilisateur.

### PRESENTATION DE L'INVENTION

L'invention vise à présenter un dispositif ne présentant pas ces inconvénients.

A cet effet, l'invention propose une servante d'atelier sur roulettes comprenant un couvercle muni d'une poignée pivotante, adaptée pour pivoter entre une position repliée dans laquelle elle est escamotée sur le couvercle, et une position déployée dans laquelle elle est en saillie par rapport audit couvercle et peut être saisie par un utilisateur souhaitant déplacer ladite servante sur ses roulettes,
le couvercle comprenant des moyens de verrouillage élastiques qui sont adaptés pour bloquer la poignée en position déployée lorsqu'un utilisateur la relève, ces moyens de verrouillage étant déblocables manuellement,
caractérisée en ce que le couvercle comprend en outre des moyens de verrouillage élastiques déblocables manuellement permettant le maintien de la poignée en position escamotée sur le couvercle.

En variante, ladite poignée comprend un cadre, dont un bord est relié au couvercle par une charnière, ledit cadre étant fermé, à l'opposé dudit bord, par un premier barreau de préhension adapté pour être saisi lorsque la poignée est en position déployée, ladite poignée comprenant en outre un second barreau de préhension s'étendant dans ledit cadre, entre deux côtés latéraux de celui-ci, en étant disposé entre ladite charnière et le premier barreau de préhension, le second barreau de préhension étant destiné à être saisi pour permettre la manipulation de la servante lorsque la poignée est en position escamotée sur le couvercle.
Le cadre est typiquement de forme générale rectangulaire, les premier et second barreaux de préhension s'étendant parallèlement à l'axe de ladite charnière.
La poignée a typiquement une forme générale symétrique par rapport au second barreau de préhension.

En variante, lesdits moyens de verrouillage comprennent, disposés de façon symétrique à l'intérieur d'un logement du couvercle dans lequel la poignée s'escamote, deux éléments de verrouillage mobiles en translation selon une direction perpendiculaire à l'axe de ladite charnière, lesdits éléments de verrouillage étant disposés en vis-à-vis l'un par rapport à l'autre, de sorte qu'un premier élément de verrouillage est adapté pour réaliser le maintien de la poignée en position déployée, et un second élément de verrouillage est adapté pour réaliser le maintien de la poignée en position repliée.

Lesdits moyens de verrouillage comprennent typiquement une portion supérieure munie de zones de préhension, et une protubérance adaptée pour s'insérer dans un logement aménagé dans la poignée, la coopération entre lesdites protubérances et logements réalisant le verrouillage en rotation de la poignée.

Selon un mode de réalisation particulier, les éléments de verrouillage comprennent des moyens de rappel élastiques pour les maintenir par défaut dans une position dans laquelle ils assurent le verrouillage de la poignée en position repliée ou déployée.

En variante, la servante comprend un caisson muni de roulettes sur lequel est montée amovible une caisse à outils fermée par ledit couvercle, ledit caisson étant muni de moyens d'arrimage permettant d'arrimer la caisse à outils au caisson.
Ledit caisson comprend typiquement un conteneur formant un compartiment interne, un capot muni d'un clapet articulé, le capot étant monté pivotant sur le conteneur afin de pouvoir ouvrir le conteneur sur sa face supérieure, et ledit clapet étant monté pivotant sur le capot, de sorte que ledit clapet peut être ouvert lorsque la caisse à outils est montée sur le caisson afin d'accéder au contenu dudit caisson par une ouverture selon une face frontale du caisson.

L'invention concerne également un couvercle comprenant :
- une poignée montée pivotante, adaptée pour pivoter entre une position repliée dans laquelle elle est escamotée, et une position déployée dans laquelle elle est en saillie,
- des moyens de verrouillage élastiques qui sont adaptés pour bloquer la poignée en position déployée lorsqu'un utilisateur la relève, ces moyens de verrouillage étant déblocables manuellement,
caractérisé en ce qu'il comprend en outre des moyens de verrouillage élastiques déblocables manuellement permettant le maintien de la poignée en position escamotée.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente une vue d'ensemble d'une servante d'atelier selon un mode de réalisation de l'invention ;
- la figure 2 présente une vue du caisson pris séparément ;
- les figures 3, 4 et 5 présentent le couvercle pris séparément et selon plusieurs configurations de la poignée ;
- la figure 6 illustre une vue détaillée d'un des moyens de verrouillage pris isolément ;
- la figure 7 présente une vue partielle du couvercle mettant en évidence le positionnement des moyens de verrouillage ;
- les figures 8, 9, 10 et 11 présentent des vues en coupe de la poignée de la servante selon plusieurs configurations.

### DESCRIPTION DETAILLEE

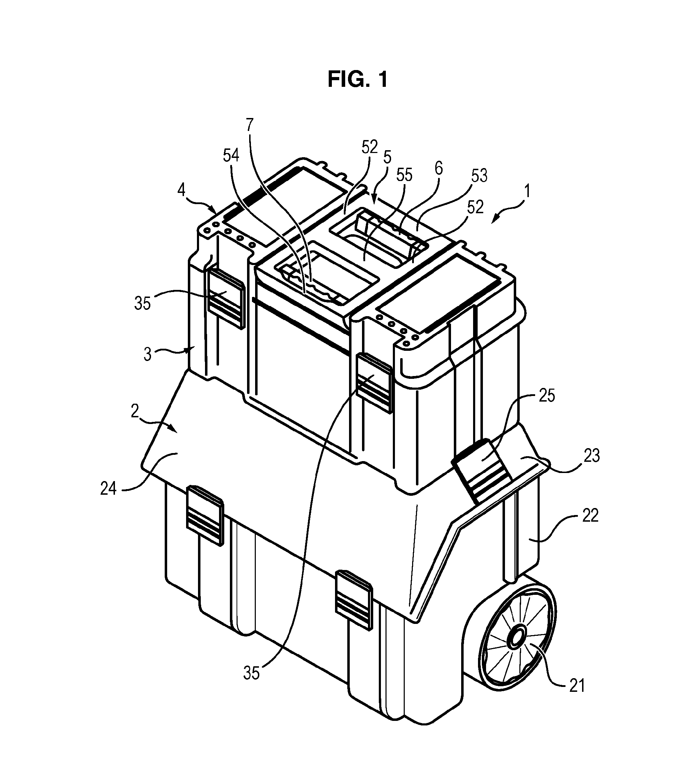

La figure 1 présente une vue d'ensemble d'une servante d'atelier selon un mode de réalisation de l'invention.
La servante 1 présentée comprend un caisson 2 muni de roulettes 21, sur lequel est disposée une caisse à outils 3 fermée par un couvercle 4.

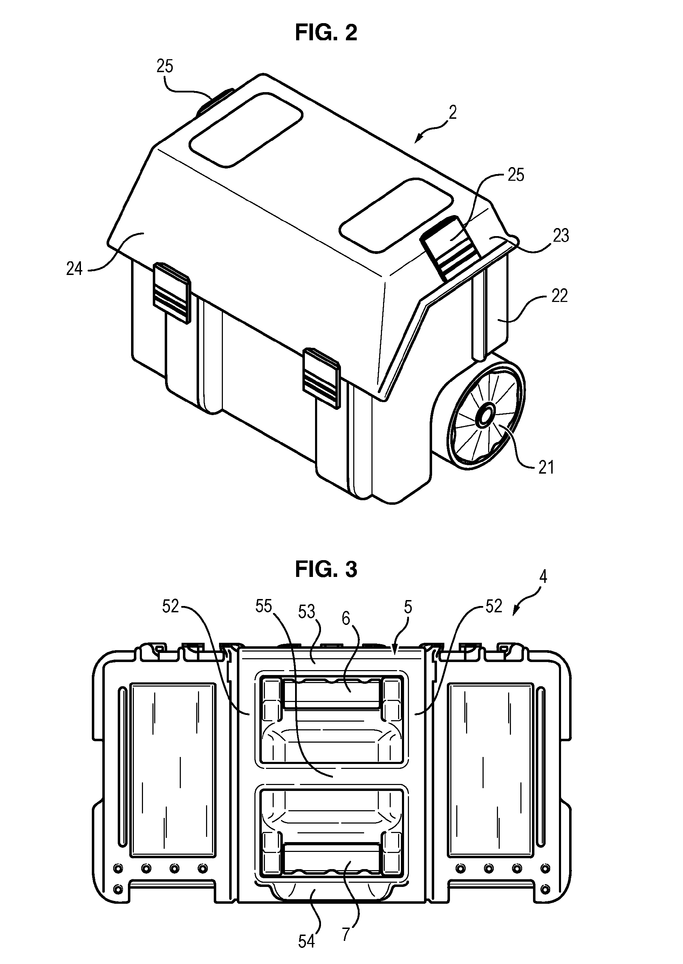

La figure 2 présente une vue du caisson 2 pris isolément, qui comprend un conteneur 22 de forme sensiblement parallélépipédique, formant un compartiment interne, et un capot 23 muni d'un clapet 24 articulé. Le capot pivotant 23 est monté pivotant sur le conteneur au moyen de charnières, afin de pouvoir ouvrir le conteneur 22 sur sa face supérieure.
Le clapet 24 est monté pivotant sur le capot 23, ce qui permet au caisson 2 d'avoir une ouverture doublement articulée, l'utilisateur pouvant choisir d'ouvrir le capot 23 ou uniquement le clapet 24. On comprend que le clapet 24 permet avantageusement d'accéder au contenu du caisson 2 lorsque la caisse à outils 3 est disposée sur la face supérieure du caisson 2 en donnant accès à une ouverture dans une paroi latérale du caisson 2, ce qui rend la manipulation du capot 23 complexe en raison du poids de la caisse à outils 3 et de son éventuel contenu.

La caisse à outils 3 a une forme sensiblement parallélépipédique, et est montée sur le capot 23 du caisson 2, typiquement sur sa face supérieure. La fixation de la caisse à outils 3 sur le caisson 2 est réalisée par des moyens d'arrimage 25 disposés sur le capot 23 du caisson 2. Ces moyens de fixation 23 sont typiquement des moyens de fixation amovibles, permettant ainsi de désolidariser la caisse à outils 3 du caisson 2.
La caisse à outils 3 est surmontée du couvercle 4, la liaison entre ces deux éléments étant réalisée par des moyens de fermeture 35 permettant le maintien en position du couvercle 4 sur la caisse à outils 3, de le relâcher afin d'accéder au contenu de la boite à outils.
Le caisson 2, son capot 23 et la caisse à outils 3 sont avantageusement dimensionnés de sorte que lorsque le caisson 2 est vite, l'utilisateur puisse y disposer la caisse à outils 3, notamment afin de réduire l'encombrement de la servante 1 lors de son transport à vide.

Le couvercle 4 est muni d'une poignée 5 montée pivotante. La poignée 5 est typiquement formée d'un cadre de forme sensiblement rectangulaire, comprenant deux bords latéraux 52, un premier bord 53 et un premier barreau de préhension 54. La poignée 5 est montée pivotante sur le couvercle 4 par son premier bord 53, qui est par exemple relié au couvercle au moyen d'une ou plusieurs charnières, ce qui lui permet ainsi de pivoter comme on le précisera par la suite. Le premier barreau de préhension 54 est disposé à l'opposé du premier bord 53, de manière à fermer ledit cadre.

Les figures 3, 4 et 5 présentent le couvercle 4 pris séparément et selon plusieurs configurations de la poignée 5.
La figure 3 présente la poignée 5 en position repliée, dans laquelle la poignée 5 est escamotée sur le couvercle 4.

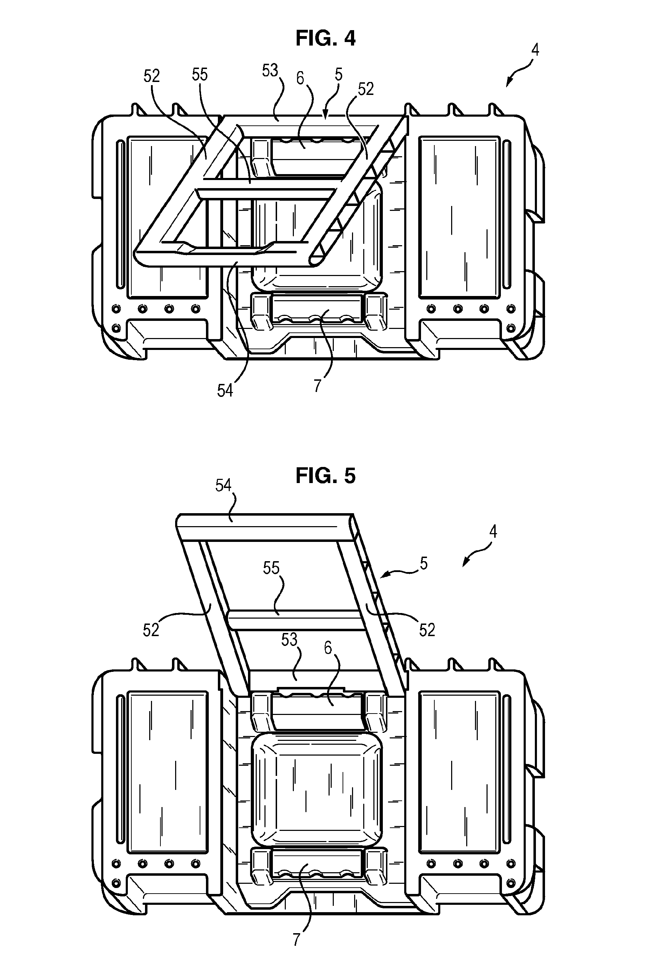

La figure 4 présente la poignée en position intermédiaire entre la position repliée et la position déployée présentée sur la figure 5.

La figure 5 présente la poignée en position déployée, dans laquelle la poignée 5 est en saillie par rapport au couvercle 4 et a réalisé une rotation d'un angle typiquement compris entre 70° et 110° par rapport à sa position repliée, par exemple égal à 90° et peut ainsi être saisie par un utilisateur souhaitant déplacer la servante 1 sur ses roulettes.

En position déployée, la poignée 5 permet à l'utilisateur de basculer la servante 1 selon l'axe de ses roulettes 21, et ainsi de la déplacer en la faisant rouler, typiquement en saisissant la poignée 5 par son premier barreau de préhension 54.

La poignée 5 telle que présentée comprend en outre un second barreau de préhension 55 disposé dans le cadre, s'étendant entre les deux bords latéraux 52, parallèlement au premier bord 53, et entre le premier bord 53 et le premier barreau de préhension 54, typiquement à mi-distance entre le premier bord 53 et le premier barreau de préhension 54. La poignée 5 a alors typiquement une forme générale symétrique par rapport au second barreau de préhension 55.
Ce second barreau de préhension 55 permet à l'utilisateur de manipuler la servante 1 lorsque la poignée 5 est en position repliée, par exemple pour saisir et soulever le couvercle 4 et/ou la caisse à outils 3 lorsque celle-ci est désolidarisée du caisson 2. Le couvercle 4 de la caisse à outils comprend avantageusement un évidement en vis-à-vis de ce second barreau de préhension 55, permettant de faciliter la préhension du second barreau de préhension 55 par un utilisateur lorsque la poignée 5 est en position repliée.
Dans le cas où le cadre de la poignée 5 a une forme sensiblement rectangulaire, les premier et second barreaux de préhension 54 et 55 s'étendent typiquement parallèlement à l'axe de la charnière reliant la poignée 5 au couvercle 4.

La poignée 5 est associée à deux moyens de verrouillage 6 et 7, montés sur le couvercle 4. Ces deux moyens de verrouillage 6 et 7 sont typiquement identiques visuellement, et montés de manière sensiblement symétrique.
Des moyens de verrouillage 6 élastiques coopèrent avec le premier bord 53 de la poignée 5 et permettent de bloquer la poignée 5 en position déployée lorsqu'un utilisateur la relève, tandis que des moyens de verrouillage 7 élastiques permettent de bloquer la poignée 5 en position repliée sur le couvercle 4, en coopérant avec le premier barreau de préhension 54 de la poignée 5. Ces moyens de verrouillage 6 et 7 sont déblocables manuellement.

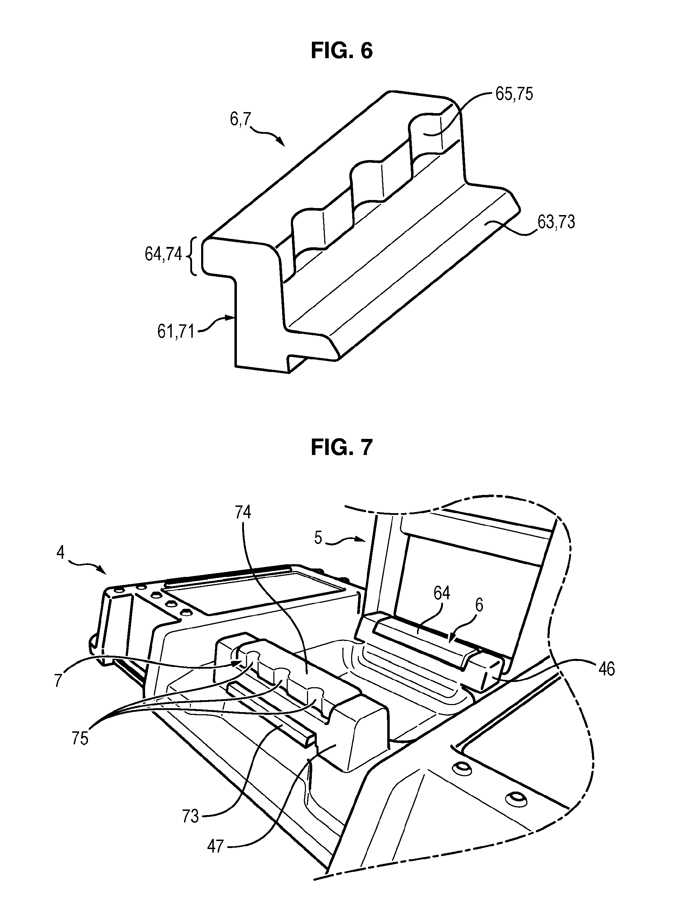

La figure 6 illustre une vue détaillée d'un des moyens de verrouillage 6 et 7 pris isolément.
Le moyen de verrouillage 6 ou 7 tel que représenté comprend un corps 61 ou 71 et une protubérance 63 ou 73 faisant saillie dudit corps.
Le corps 61 ou 71 comprend une portion supérieure 64 ou 74 aménagée en forme de poignée, comprenant typiquement plusieurs évidements 65 ou 75 pour en faciliter la prise par l'utilisateur. Dans le mode de réalisation représenté, ces évidements 65 ou 75 sont des rainures dont la section est une portion de cercle et s'étendant sur la hauteur de la portion supérieure 64 ou 74.
En variante, les moyens de verrouillage 6 et 7 comprennent des différences structurelles. Par exemple, la protubérance 63 du moyen de verrouillage 6 qui coopère avec le premier bord 53 de la poignée 5 peut présenter des rainures ou des gorges, disposées sensiblement perpendiculaires à l'axe de la liaison entre la poignée 5 et le couvercle 4, de manière à indexer la poignée 5 par rapport au moyen de verrouillage 6.

La figure 7 présente une vue partielle du couvercle 4 mettant en évidence le positionnement des moyens de verrouillage 6 et 7.
Le couvercle 4 tel que représenté comprend une portion centrale définissant un logement dans lequel sont disposés les moyens de verrouillage 6 et 7 et permettant de loger la poignée 5 en position repliée lorsqu'elle est escamotée sur le couvercle 4.
Les moyens de verrouillage 6 et 7 sont typiquement disposés à l'intérieur dudit logement, de manière symétrique par rapport à un plan médian transversal du couvercle 4, parallèle à la charnière reliant la poignée 5 au couvercle 4. Les moyens de verrouillage 6 et 7 comprennent alors typiquement des moyens élastiques permettant de les déplacer lorsque l'utilisateur les débloque manuellement, le déplacement des moyens de verrouillage 6 et 7 étant typiquement réalisé selon une direction perpendiculaire à leur plan de symétrie.
Les moyens de verrouillage 6 et 7 sont logés dans des supports respectivement 46 et 47 du couvercle 4, qui assurent notamment le maintien et le guidage du déplacement des moyens de verrouillage 6 et 7. Ces supports 46 et 47 sont typiquement adaptés pour guider le déplacement en translation des moyens de verrouillage 6 et 7 en translation sensiblement selon la direction des protubérances 63 et 73. Les deux moyens de verrouillage tels que représentés sont disposés de manière symétrique par rapport à la direction longitudinale du couvercle 4. Les deux moyens de verrouillage 6 et 7 sont ainsi disposés de sorte que leurs protubérances soient chacune orientées vers le bord long du couvercle 4 le plus proche.

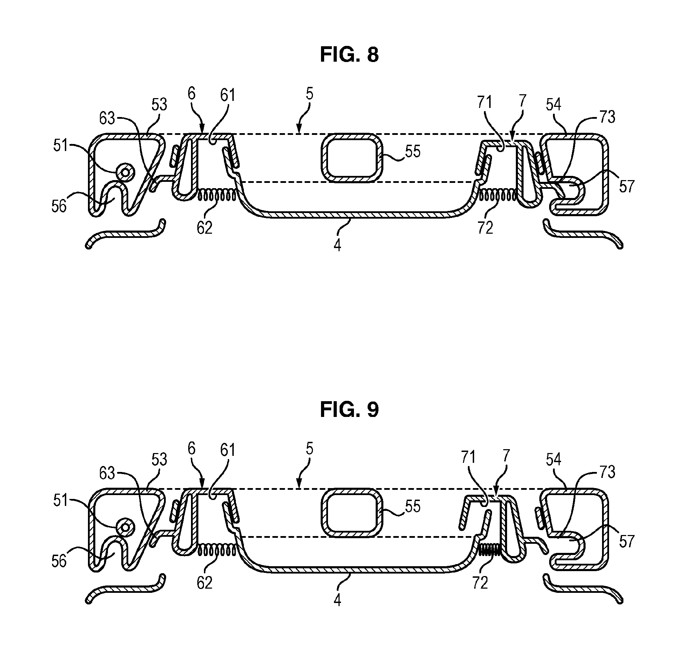

Les figures 8 à 11 présentent une vue en coupe du couvercle 4 de la servante 1, de la poignée 5 et des moyens de verrouillage 6 et 7 selon plusieurs positions de la poignée 5 et des moyens de verrouillage 6 et 7. Plus précisément, ces figures 8 à 11 illustrent les différentes étapes pour le passage de la position repliée de la poignée 5 telle qu'illustrée sur la figure 4 vers la position déployée telle qu'illustrée sur la figure 5.
Ces figures illustrent également l'axe de rotation 51 de la poignée 5 par rapport au couvercle 4 de la caisse à outils 3, cet axe de rotation 51 étant ici tangent au premier bord 53 de la poignée 5.

De plus, ces figures 8 à 11 présentent la disposition des moyens de verrouillage 6 et 7 qui sont agencés de manière symétrique l'un par rapport à l'autre.
Tel qu'illustré sur ces figures, les moyens de verrouillage 6 et 7 peuvent se déplacer en translation selon une direction sensiblement perpendiculaire à l'axe de rotation 51 de la poignée 5, dans le plan du couvercle 4.
Les moyens de verrouillage 6 et 7 sont chacun mobiles en translation par rapport au couvercle 4, couplés au couvercle 4 typiquement au moyen d'ergots permettant de guider le déplacement des moyens de verrouillage 6 et 7.
Les moyens de verrouillage 6 et 7 sont également associés à des moyens élastiques 62 et 72 tels que des ressorts, qui sont chacun reliés d'une part à l'un des moyen de verrouillage 6 et 7, et d'autre part au couvercle 4 afin de contraindre le déplacement des moyens de verrouillage 6 et 7 par rapport au couvercle 4. En variante, le couvercle 4 et/ou les moyens de verrouillage 6 et 7 peuvent comprendre des ergots guidant le déplacement des moyens élastiques 62 et 72. Le déplacement des moyens de verrouillage 6 et 7 est réalisé en comprimant les moyens élastiques 62 et 72, et ainsi en rapprochant les deux moyens de verrouillage 6 et 7 l'un de l'autre.
Les protubérances 63 et 73 des moyens de verrouillage 6 et 7 sont adaptées pour venir s'engager dans des logements complémentaires 56 et 57 aménagés dans la poignée 5.

En position repliée, le second moyen de verrouillage 7 assure le maintien en position de la poignée 5 via sa protubérance 73 qui est logée dans le logement 57 du premier barreau de préhension 54 de la poignée 5. Le ressort 72 assure le maintien en position du second moyen de verrouillage 7 qui vient en butée contre le couvercle 4, afin d'empêcher le déplacement de la poignée 5.

Afin de déverrouiller la poignée 5, l'utilisateur déplace le second moyen de verrouillage 7, typiquement en le saisissant par sa portion supérieure 74 de sorte que la protubérance 73 se désengage du logement 57. Le sens de déplacement du second moyen de verrouillage 7 est illustré sur la figure 9 par la flèche F7. On note que l'utilisateur peut actionner le second moyen de verrouillage 7 uniquement, ou les deux moyens de verrouillage 6 et 7 conjointement dans la mesure où le premier moyen de verrouillage 6 n'a pas d'effet sur le maintien de la poignée 5 en position repliée. Les deux moyens de verrouillage 6 et 7 sont alors actionnés en comprimant les ressorts 62 et 72, c'est-à-dire en rapprochant lesdits moyens de verrouillage 6 et 7 l'un de l'autre.

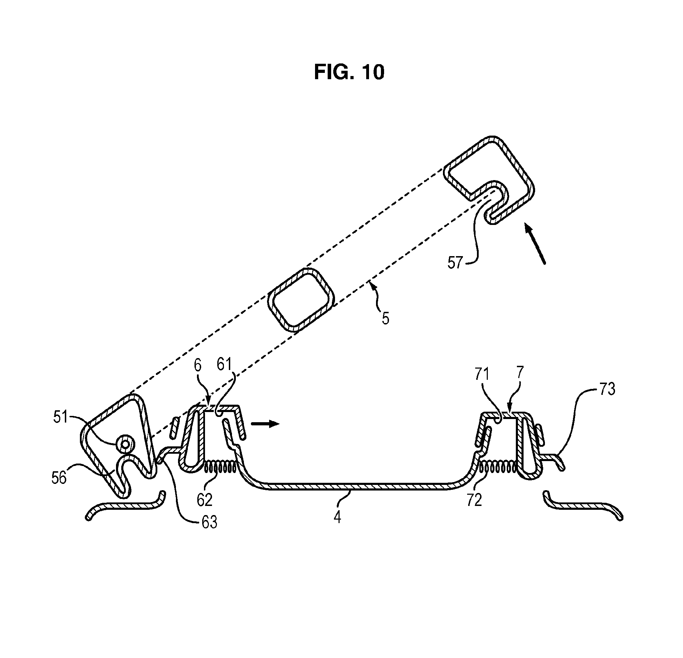

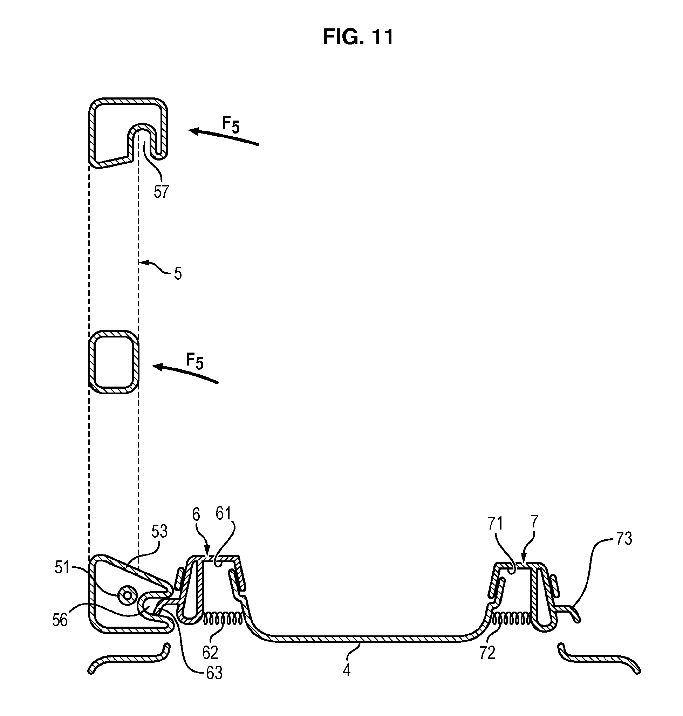

L'utilisateur peut alors entrainer la poignée 5 en rotation autour de son axe 51 comme illustré sur la figure 10, et ensuite relâcher le moyen de préhension 7 qui est ramené dans sa position de verrouillage par le ressort 72, en butée contre le couvercle 4.
Le premier bord 53 de la poignée 5 et la protubérance 63 du premier moyen de verrouillage 6 sont configurés de sorte que le premier moyen de verrouillage 6 se translate lorsque la protubérance 63 est en contact avec la paroi du premier bord 53, puis que la protubérance 63 se positionne dans le logement 56 de la poignée 5 comme illustré sur la figure 11. De cette manière, le premier moyen de verrouillage 6 n'empêche la rotation de la poignée 5 que lorsque ladite poignée est en position déployée telle qu'illustrée sur la figure 11.

Afin de ramener la poignée 5 en position repliée, l'utilisateur réalise alors une action similaire sur le premier moyen de verrouillage 6 en comprimant le ressort 62 afin de le débloquer manuellement, ce qui libère la rotation de la poignée 5 en désengageant la protubérance 63 du logement 56. Il peut alors entrainer la poignée 5 en rotation autour de son axe 51 afin de la ramener en position repliée telle qu'illustrée sur la figure 8. Comme précédemment, on note que l'utilisateur peut actionner le premier moyen de verrouillage 6 uniquement, ou les deux moyens de verrouillage 6 et 7 conjointement dans la mesure où le second moyen de verrouillage 7 n'a pas d'effet sur le maintien de la poignée 5 en position déployée.
Comme précédemment, le second moyen de verrouillage 7 ne s'oppose pas au déplacement de la poignée 5 dans ce sens de déplacement allant de la position déployée vers la position repliée, et le second moyen de verrouillage 7 se translate lorsque la protubérance 73 est en contact avec la paroi du premier barreau de préhension 54 jusqu'à ce qu'elle s'engage dans le logement 57 de la poignée 5 et verrouille ainsi son déplacement.

Ces figures illustrent clairement plusieurs avantages de l'invention, qui permet de verrouiller le déplacement de la poignée 5 à la fois lorsqu'elle est en position repliée, et lorsqu'elle est en position déployée.
De cette manière, la poignée 5 est maintenue en position déployée lorsque l'utilisateur souhaite déplacer la servante 1 d'atelier en la faisant rouler grâce aux roulettes 21 du caisson 2, et l'utilisateur peut également soulever la servante 1 ou le cas échéant la caisse à outils 3 grâce au second barreau de préhension 55 de la poignée 5. Le couvercle 4 comprend donc une poignée 5 unique, et non pas deux poignée correspondant aux deux modes de préhension de la servante 1.
De plus, le verrouillage de la poignée 5 s'effectue de manière automatique lorsqu'elle atteint la position voulue, qu'il s'agisse de la position déployée ou de la position repliée. La manipulation des premier et second moyens de verrouillage 6 et 7 n'est requise que lorsque l'utilisateur souhaite libérer le mouvement en rotation de la poignée 5 à partir de la position déployée ou de la position repliée, l'utilisateur n'ayant à manipuler qu'un de ces moyens de verrouillage 6 ou 7 à la fois.
Par ailleurs, du fait de la disposition des moyens de verrouillage 6 et 7 qui sont disposés en vis-à-vis, de manière sensiblement symétrique l'un par rapport à l'autre, l'utilisateur réalise un mouvement similaire pour déverrouiller la rotation de la poignée à partir de la position déployée ou à partir de la position repliée. De plus, dans la mesure où chacun des moyens de verrouillage 6 et 7 joue un rôle de maintien de la poignée uniquement dans une position donnée, l'utilisateur peut indifféremment actionner le moyen de verrouillage 6 ou 7 souhaité, ou les deux moyens de verrouillage 6 et 7 ensemble lorsqu'il souhaite basculer la poignée 5 d'une position vers une autre.

Le couvercle 4 et la poignée 5 de la servante 1 sont typiquement réalisés en plastique, par exemple par injection.

Le couvercle 4 tel que présenté muni de la poignée 5 et des moyens de verrouillage 6 et 7 peut être utilisé dans d'autres applications, et n'est pas limité à une utilisation sur une servante d'atelier.

## Revendications

1. Servante (1) d'atelier sur roulettes (21) comprenant un couvercle (4) muni d'une poignée (5) pivotante, adaptée pour pivoter entre une position repliée dans laquelle elle est escamotée sur le couvercle (4), et une position déployée dans laquelle elle est en saillie par rapport audit couvercle (4) et peut être saisie par un utilisateur souhaitant déplacer ladite servante (1) sur ses roulettes (21),
le couvercle (4) comprenant des moyens de verrouillage élastiques (67) qui sont adaptés pour bloquer la poignée (5) en position déployée lorsqu'un utilisateur la relève, ces moyens de verrouillage étant déblocables manuellement,
**caractérisée en ce que** le couvercle comprend en outre des moyens de verrouillage (7) élastiques déblocables manuellement permettant le maintien de la poignée (5) en position escamotée sur le couvercle (4).

2. Servante (1) d'atelier selon la revendication précédente, dans laquelle ladite poignée (5) comprend un cadre, dont un bord (53) est relié au couvercle par une charnière, ledit cadre étant fermé, à l'opposé dudit bord, par un premier barreau de préhension (54)adapté pour être saisi lorsque la poignée (5) est en position déployée, ladite poignée (5) comprenant en outre un second barreau de préhension (55) s'étendant dans ledit cadre, entre deux côtés latéraux de celui-ci, en étant disposé (51) entre ladite charnière (53) et le premier barreau de préhension (54), le second barreau de préhension (55) étant destiné à être saisi pour permettre la manipulation de la servante (1) lorsque la poignée (5) est en position escamotée sur le couvercle (4).

3. Servante (1) d'atelier selon la revendication précédente, dans laquelle le cadre est de forme générale rectangulaire, le premier et le second barreaux de préhension s'étendant parallèlement à l'axe de ladite charnière.

4. Servante (1) d'atelier selon la revendication précédente, dans laquelle la poignée a une forme générale symétrique par rapport au second barreau de préhension.

5. Servante (1) d'atelier selon la revendication précédente, dans laquelle lesdits moyens de verrouillage (6, 7) comprennent, disposés de façon symétrique à l'intérieur d'un logement du couvercle dans lequel la poignée s'escamote, deux éléments de verrouillage mobiles en translation selon une direction perpendiculaire à l'axe de ladite charnière (51), lesdits éléments de verrouillage (6, 7) étant disposés en vis-à-vis l'un par rapport à l'autre, de sorte qu'un premier élément de verrouillage (6) est adapté pour réaliser le maintien de la poignée (5) en position déployée, et un second élément de verrouillage (7) est adapté pour réaliser le maintien de la poignée (5) en position repliée.

6. Servante (1) d'atelier selon la revendication précédente, dans laquelle lesdits moyens de verrouillage (6, 7) comprennent une portion supérieure (64, 74) munie de zones de préhension (65, 75), et une protubérance (63, 73) adaptée pour s'insérer dans un logement (56, 57) aménagé dans la poignée (5), la coopération entre lesdites protubérances (63, 73) et logements (56, 57) réalisant le verrouillage en rotation de la poignée (5).

7. Servante d'atelier (1) selon la revendication précédente, dans laquelle les éléments de verrouillage (6, 7) comprennent des moyens de rappel élastiques (62, 72) pour les maintenir par défaut dans une position dans laquelle ils assurent le verrouillage de la poignée (5) en position repliée ou déployée.

8. Servante (1) d'atelier selon l'une des revendications précédentes, comprenant un caisson (2) muni de roulettes (21) sur lequel est montée amovible une caisse à outils (3) fermée par ledit couvercle (4), ledit caisson (2) étant muni de moyens d'arrimage (25) permettant d'arrimer la caisse à outils (3) au caisson (2).

9. Servante (1) d'atelier selon la revendication précédente, dans laquelle ledit caisson (2) comprend un conteneur (22) formant un compartiment interne, un capot (23) muni d'un clapet (24) articulé, le capot (23) étant monté pivotant sur le conteneur (22) afin de pouvoir ouvrir le conteneur (22) sur sa face supérieure, et ledit clapet (24) étant monté pivotant sur le capot (23), de sorte que ledit clapet (24) peut être ouvert lorsque la caisse à outils (3) est montée sur le caisson (2) afin d'accéder au contenu dudit caisson (2) par une ouverture selon une face frontale du caisson (2).

10. Couvercle (4) comprenant :
- une poignée (5) montée pivotante, adaptée pour pivoter entre une position repliée dans laquelle elle est escamotée, et une position déployée dans laquelle elle est en saillie,
- des moyens de verrouillage élastiques (67) qui sont adaptés pour bloquer la poignée en position déployée lorsqu'un utilisateur la relève, ces moyens de verrouillage étant déblocables manuellement, **caractérisé en ce qu'**il comprend en outre des moyens de verrouillage (7) élastiques déblocables manuellement permettant le maintien de la poignée (5) en position escamotée.
